# EUROPÄISCHE PATENTANMELDUNG

(11) **EP 0 689 948 A2**
(43) Veröffentlichungstag der Anmeldung: **03.01.1996**
(21) Anmeldenummer: 95109339.2
(22) Anmeldetag: 16.06.1995
(51) Int. Cl.: B60C 13/00, B60C 13/04

(54) **Aufbringen eines Zeichens in eine sichtbare Fläche eines Reifens**

(30) Priorität: 28.06.1994 DE 4422548
(71) Anmelder: Uniroyal Englebert Reifen GmbH, D-52068 Aachen (DE)
(72) Erfinder: Lederhofer, Raymund, Dr., D-52066 Aachen (DE)

(57) **Zusammenfassung**

Verfahren zum Aufbringen von Zeichen (24) in eine sichtbare Fläche eines Reifens, bei dem zumindest die Fläche zunächst vulkanisiert und erst nach der Vulkanisation das Zeichen in die Gummifläche eingraviert wird.

## Beschreibung

Die Erfindung betrifft ein verfahren zum Aufbringen von Zeichen in eine sichtbare Fläche eines Reifens sowie eine Vorrichtung zur Durchführung des Verfahrens, einen Reifen sowie dessen Herstellung.

Es sind Reifen bekannt, bei denen auf die Seitenwände Zeichen, z.B. in Form von Buchstaben, sichtbar aufgebracht sind. Derartige Zeichen sind beispielsweise der Name des Herstellers, Reifentype, sonstige Reifenkennzeichnungen. Bei den bekannten Reifen wird üblicherweise die Kennzeichnung bereits vor Beginn des Vulkanisationsprozesses während der Reifen sich in der Vulkanisationsmulde befindet, in die Außenkautschukschicht eingeprägt. Die Kennzeichnungen sind somit bereits vor dem Vulkanisationsprozeß bei diesen Reifen festgelegt. Außerdem sind Reifen mit Zeichen mit von der Farbe der Seitenwand des Reifens abweichender Farbe bekannt. Zur Herstellung derartiger Reifen wird im Bereich der Seitenwand ein farbiger Kautschukstreifen in eine Vertiefung in der äußeren Kautschukschicht eingelegt und mit einem der Farbe der Seitenwand entsprechenden Kautschukstreifen abgedeckt. In der Vulkanisationsmulde wird vor der Vulkanisation das Zeichen in die Kautschukschichten eingeprägt, so daß sich dem Zeichen entsprechende Erhebungen im Seitenwandbereich des Reifens bilden. Nach erfolgter Vulkanisation wird dann die obere geprägte Gummischicht mit viel Aufwand vorsichtig abgehobelt. Ein derartiges Verfahren ist beispielsweise aus der US-PS 1 448 286 bekannt. Aus der DE-PS 30 46 664 ist es bekannt, Gummistreifen mit Kennzeichen entsprechenden Austanzungen mit farbigen Kennzeichen zu füllen und so gefüllt auf die Seitenwand aufzudrücken. Bei anschließender Vulkanisation werden die so aufgelegten Gummistreifen mit der Seitenwand verbunden. Zum Schutz vor zu großen Beschädigungen durch den Vulkanisationsprozeß ist der DE-PS 30 46 664 der Einsatz von Schutzfolien zu entnehmen, die nach erfolgter Vulkanisation abgezogen werden. Sowohl ein Reifen nach der US-PS 1 448 286 als auch ein Reifen nach der DE-PS 30 46 664 erfordert eine vollständige Festlegung der Zeichengebung vor der Vulkanisation eines Reifens. Den individuellen Ansprüchen an die Zeichengebung eines jeden Reifen entsprechend müssen zuvor Formen für den Prägeprozeß bzw. Stanzwerkzeuge für den Stanzprozeß bereitgestellt werden. Zusätzliche Zeichen nach Fertigstellung des Reifens kurzfristig ermittelten, individuellen Wünschen entsprechend sind nach erfolgter Vulkanisation nicht mehr möglich. Der hohe Aufwand an Einzelwerkzeugen, nur begrenzte Möglichkeiten der Einzelfertigung und fehlende, flexible Ergänzungsmöglichkeiten in der Zeichengebung verursachen hohe Kosten und zurückhaltende Zeichenverwendung an Reifen. Die Festlegung auf die Zeichengebung vor erfolgtem Vulkanisationsprozeß birgt zudem eine erhöhte Gefahr einer Abweichung der erzielten Zeichen von der gewünschten Zeichengebung und somit Qualitätsverlust durch den zwischendurch erfolgten Vulkanisationsprozeß und die anschließend erforderlichen, nur bedingt erfolgreichen Nacharbeiten.

Der Erfindung liegt die Aufgabe zugrunde, mit einfachen Mitteln auch nach erfolgtem Vulkanisationsprozeß individuellen Wünschen entsprechend Zeichen in eine sichtbare Fläche eines Reifens aufzubringen sowie einen derartigen Reifen zu schaffen.

Die Aufgabe wird erfindungsgemäß durch das Verfahren zum Aufbringen von Zeichen in eine sichtbare Fläche eines Reifens gemäß den Merkmalen von Anspruch 1, sowie durch die Vorrichtung zur Durchführung des Verfahrens gemäß den Merkmalen von Anspruch 11, durch den Reifen gemäß den Merkmalen von Anspruch 12 und durch das Verfahren zur Herstellung eines Reifens gemäß den Merkmalen von Anspruch 15 gelöst.

Durch Eingravieren eines Zeichens in die Gummifläche nach erfolgter Vulkanisation eines Reifens kann in den bereits fertiggestellten Reifen ohne Einfluß durch die Vulkanisation ein beliebiges auch nach der Vulkanisation erst festgelegtes Zeichen am Reifen aufgebracht werden. Besondere Maßnahmen zum Schutz der Zeichen beim Vulkanisationsprozeß können entfallen. Besondere, den einzelnen Reifen entsprechende Einzelwerkzeuge, wie Prägestempel oder eine Vielzahl von unterschiedlichen Stanzwerkzeugen, die jeweils nur für einige wenige Reifen verwendet werden könnten, entfällt. Die Zeichen sind, falls erforderlich, sogar erst wesentlich später als die erfolgte Vulkanisation möglich. Es ist sogar möglich, die Zeichen nach ausgelaufener Produktion aufzubringen.

Vorteilhafterweise, weil auch zur Serienfertigung besonders geeignet und somit entsprechend einfach und kostengünstig herzustellen, wird der gesamte Reifen zunächst vulkanisiert und erst nach Vulkanisation das Zeichen in die Gummifläche eingraviert.

Bevorzugt wird das Verfahren gemäß den Merkmalen von Anspruch 3. Gerade im Bereich der äußeren Seitenwand ist das individuelle kurzfristige Aufbringen von Zeichen besonders wünschenswert. Marktabhängig, abhängig von gesetzlichen Bestimmungen oder Verordnungen oder von kurzfristig eingegangenen Kundenwünschen können somit neue schnell erkennbare Zeichen auch noch auf Reifen mit bereits abgeschlossener Produktion aufgebracht werden.

Vorteilhaft ist ein Verfahren zum Aufbringen eines Zeichens, bei dem beim Gravieren die Farbe der Oberfläche im Bereich des Zeichens geändert wird. Somit ist die Herstellung von gegenüber der umgebenden Fläche andersfarbigen Zeichen besonders einfach und sicher möglich. Die aufwendigen, wenig zufriedenstellenden Schutzmaßnahmen gegen Verlaufen der Farbe oder Verschwimmen der Konturen beim Vulkanisationsprozeß, können entfallen.

Bevorzugt ist das Verfahren gemäß den Merkmalen von Anspruch 5. Individuellen Wünschen entsprechend können farbige Zeichen mit einfachen Mitteln kurzfristig aufgebracht werden. Besonders vorteilhaft ist das Verfahren gemäß den Merkmalen von Anspruch 6, durch das auf einen Reifen derartige Zeichen aufgebracht werden können, ohne von außen erkennbare Abweichungen in der Seitenwandgestaltung des Reifens in Kauf zu nehmen. Je nach individuellem Wunsch kann die äußere Seitenwand eines solchen Reifens ohne andersfarbige Zeichen, möglicherweise jedoch mit der Farbe der Seitenwand entsprechenden Zeichen versehen und ohne äußere Abweichungen gegenüber einem herkömmlichen Reifen ohne Farbzeichen oder aber kurzfrist mit individuellen Farbzeichen versehen, angeboten werden.

Das Verfahren gemäß den Merkmalen von Anspruch 7 ermöglicht in einfacher Weise mehrere Zeichen mit unterschiedlichen Farben an einem Reifen.

Die Merkmale von Anspruch 8 stellen ein weiteres vorteilhaftes Verfahren dar, mit dessen Hilfe beispielsweise Bar Codes in einfacher Weise individuellen Wünschen nach der Vulkanisation entsprechend aufgebracht werden können.

Bevorzugt, weil besonders einfach, mit geringem Stromaufwand und besonders guter Zeichengenauigkeit durchzuführen ist das Aufbringen von Zeichen auf pyrotechnischem Wege mit Hilfe eines Lasers.

Weiterhin vorteilhaft ist ein Verfahren zum Aufbringen von Zeichen, bei dem auf die Fläche zunächst der Oberfläche Wärme entziehende Fluide aufgebracht werden, wodurch die Fläche versprödet wird. Im Anschluß daran kann mit einfachen mechanischen Graviermitteln ein Zeichen in die versprödete Fläche eingraviert werden.

Der Einsatz des Lasers ermöglicht aufgrund der berührungslosen Gravur frei von mechanischen Kräften eine Bearbeitung ohne Berücksichtigung der Elastizität und Plastizität des Gummis. Durch Verspröden der Oberfläche ist eine hochgenaue Zeichenqualität auch mit mechanischen Graviermitteln möglich. Unerwünschte Nebeneffekte aufgrund von elastischem Verhalten des Gummis während der Bearbeitung entfallen.

Erfindungsgemäß gelöst wird die Aufgabe auch durch die Vorrichtung zur Durchführung des Verfahrens gemäß den Merkmalen von Anspruch 11. Die Gravureinrichtung und die Mittel zur Aufnahme des Reifens werden entsprechend der gewünschten Zeichengebung relativ zueinander dreidimensional bewegt. Somit kann die Kontur der Gravur unter Berücksichtigung der Kontur der Reifenoberfläche mit gleichbleibender Zeichentiefe über den gesamten Reifen hinweg erfolgen. Vorteilhafterweise ist die Gravureinrichtung ortsfest und die Mittel zur Aufnahme des Reifens werden gegenüber der Gravureinrichtung dreidimensional bewegt. Hierdurch ist eine Trennung der Steuerungseinrichtungen für den Bewegungsablauf und von denen zur Betätigung der Gravureinrichtung und die Vermeidung von dadurch bedingten Problemen möglich. Es ist aber auch denkbar, die Gravureinrichtung dreidimensional gesteuert zu bewegen und die Mittel zur Aufnahme des Reifens ortsfest auszuführen. Ebenso ist es denkbar, sowohl die Gravureinrichtung als auch die Mittel zur Aufnahme des Reifens gesteuert relativ zueinander zu bewegen.

Bevorzugt wird ein Reifen gemäß den Merkmalen von Anspruch 13. Ein derartiger Reifen ermöglicht eine Zeichengebung mit hochgenauer Kontur. Die nur teilweise und unregelmäßig vom Auge erkennbaren Konturseitenwände, die bei herkömmlichen Farbzeichen in Reifen, deren Konturseitenwände farbig ausgebildet werden, ungleichmäßige Farbkonturen erkennen lassen, weisen hier keine qualitätsverschlechternde Effekte auf. Bevorzugt, weil besonders einfach und sicher zu erreichen, ist dabei ein Reifen gemäß den Merkmalen von Anspruch 14.

Das Verfahren zur Herstellung eines Reifens gemäß den Merkmalen von Anspruch 15 ermöglicht die Schaffung eines Reifens mit Zeichen in einfacher Weise, wobei farbige Zeichen auch nach erfolgter Vulkanisation individuell aufgebracht werden können.

Die Erfindung wird im folgenden anhand der in den Figuren 1 bis 6 näher dargestellten Ausführungsbeispiele erläutert. Hierin zeigen
- Fig. 1: eine ausschnittsweise Seitenansicht eines Reifens mit Sicht auf die mit Zeichen versehene Reifenseitenwand
- Fig. 2: Teilquerschnittsdarstellung eines Reifens nach erfolgter Vulkanisation,
- Fig. 3: Teilquerschnitt des Reifens von Fig. 1 gemäß der Schnittdarstellung gemäß dem Schnitt III-III mit eingraviertem Zeichen,
- Fig. 4: schematische Darstellung zur pyrotechnischen Eingravierung von Zeichen mit Hilfe eines Lasers in die Seitenwand eines Reifens,
- Fig. 5: schematische Darstellung zur Reifenpositionierung bei der Lasergravur,
- Fig. 6: schematische Darstellung wie in Fig. 4 jedoch zur Bearbeitung der Innenseite eines Reifens.

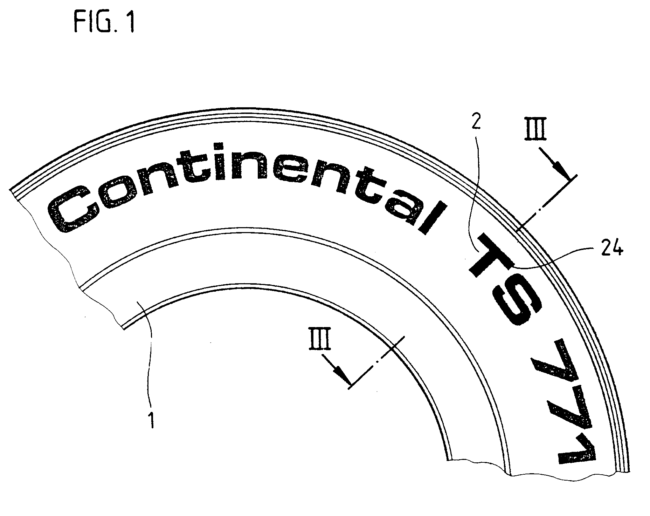

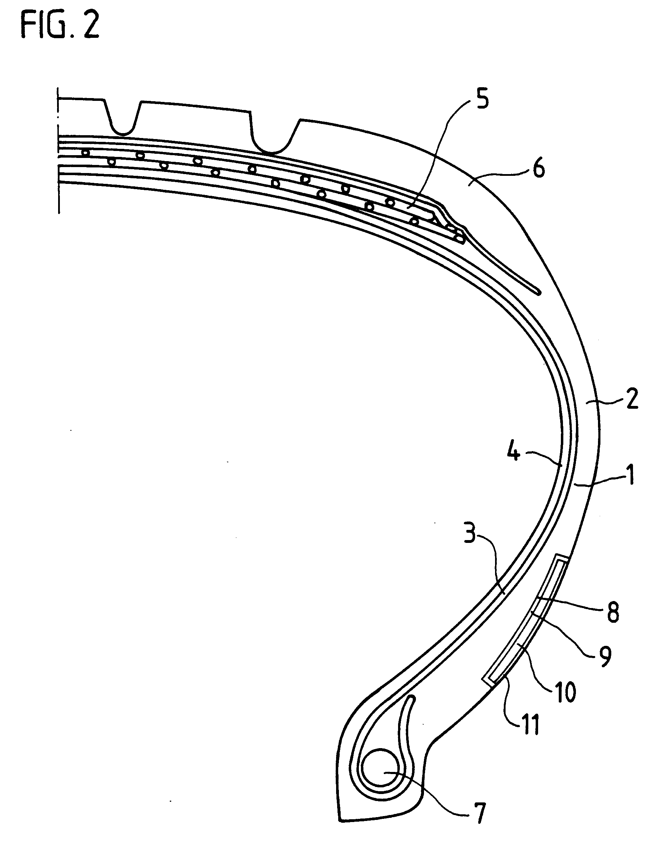

Die Figuren 1 bis 3 zeigen einen Reifen bekannter Bauart mit über den gesamten Umfang des Reifens reichender Karkasse 3, die sich in Reifenachsrichtung von dem linken, nicht dargestellten, Reifenkern über die linke nicht dargestellte Seitenwand bis hin zur rechten Seitenwand 1 und den rechten Kern 7 erstreckt. Zwischen den Seitenwänden 1 sind in bekannter Weise radial außerhalb der Karkassenlage Gürtellagen 5 und darüber ein Laufstreifen 6 aufgelegt. Der Reifen weist in bekannter Weise radial innerhalb der Karkasse 3 eine sich über den Umfang des Reifens erstreckende und in axialer Richtung vom rechten zum linken Kern 7 reichende Innenschicht 4 auf.

Der Seitenwandaufbaustreifen 2 der Seitenwand 1 ist mit einer in Umfangsrichtung sich über den Reifen erstreckenden Ausnehmung 8 versehen, die mit einem Streifen 9 ausgekleidet ist und in die ein Streifen 10 aus gegenüber dem Seitenwandaufbaustreifen 2 andersfarbigen Kautschukmaterial bündig eingelegt ist. Auf den Kautschukstreifen 10 ist ein Abdeckstreifen 11 aus Kautschuk mit gleicher Farbe, wie die des Seitenwandaufbaustreifens 2, mit der Außenkontur des Seitenwandaufbaustreifens 2 flüchtender Außenkontur aufgelegt. Abdeckstreifen 11 und Außenkontur des Seitenwandaufbaustreifens 2 bilden somit einen übergangslosen, gleichförmigen Verlauf der Außenkontur der Seitenwand 1.

Der Streifen 9 ist aus einem Material gefertigt, das undurchlässig für polare Substanzen ist, so daß diese nicht in das Farbmaterial gelangen. Beispielsweise ist es denkbar, den Streifen 9 aus Brombutylkautschuk zu fertigen. In Fällen, in denen die Übertragungsgefahr gering ist, ist es auch denkbar, auf den Streifen 9 ganz zu verzichten.

Nach dem Reifenaufbau wird der Reifen in herkömmlicher Weise vulkanisiert. Die Eingravur von Zeichen erfolgt zu einem beliebigen späteren Zeitpunkt.

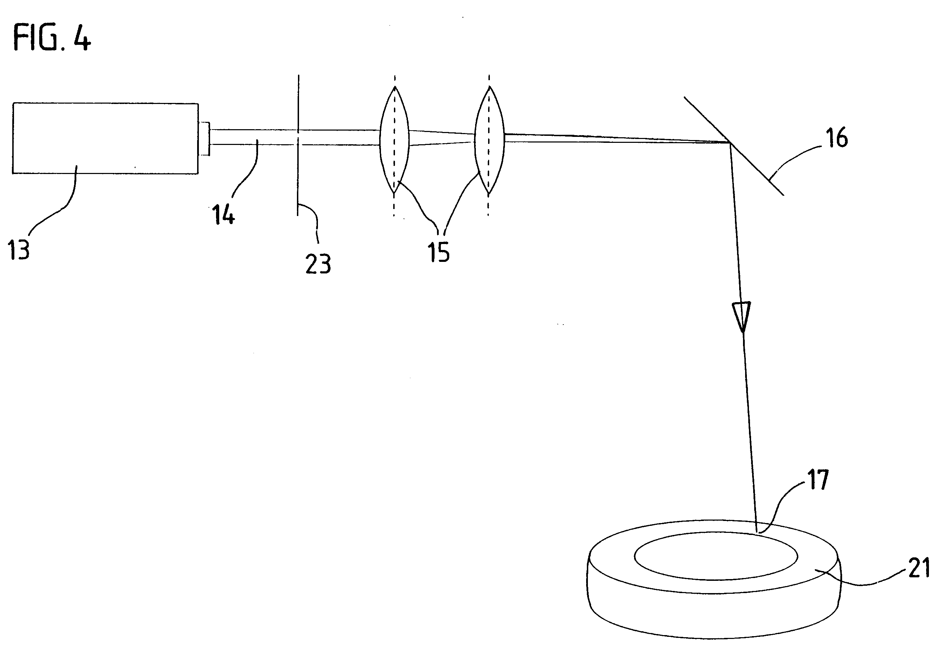

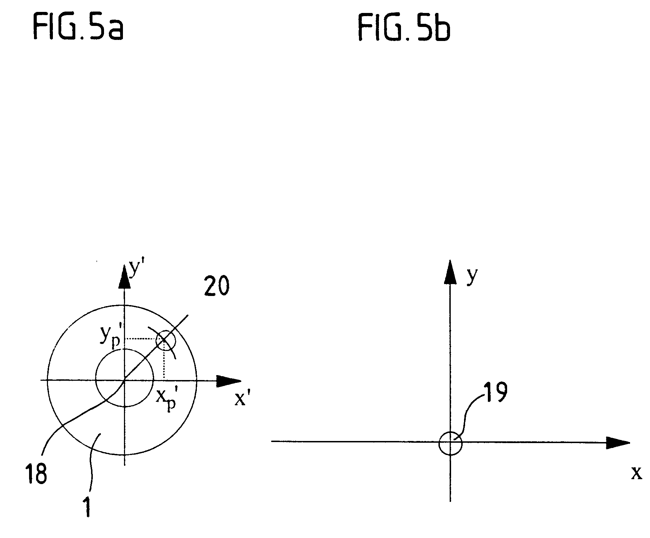

Wie in Fig. 4 dargestellt ist, wird mit Hilfe eines CO₂-Lasers mit kurzer Pulsdauer, beispielsweise 100 ns, und einer Taktfrequenz im 10 Hz-Bereich die Laserstrahlung 14 durch eine Blende 23 zur Bildung der gewünschten Brennform des Laserstrahls über eine focusierende Optik 15 und Spiegel 16 auf die Seitenwand 1 des Reifens gerichtet. Der Laserstrahl 14 trifft die Seitenwand in einem Gravierpunkt 17. Im Gravierpunkt 17 bewirkt der Laserstrahl die pyrotechnische Entfernung der äußeren Gummischicht. Zur Erzeugung einer gewünschten, vorbestimmten Gravur wird dem Reifen ein Koordinatensystem K' zugeordnet, dessen Urspung in der radialen Mitte des Reifens liegt. Ein derartiges Koordinatensystem ist in zweidimensionaler Darstellung in Fig. 5a dargestellt. In Fig. 5b ist ein dem Focus der optischen Laserabbildung zugeordnetes Koordinatensystem K mit einem Ursprung im Brennbereich 19 des Lasers dargestellt. Zur Gravur befindet sich der Reifen auf einem dreidimensional beweglichen, nicht dargestellten, Wagen, der mit Hilfe eines Antriebssystemes bekannter Bauart, das mit einem nicht dargestellten Steuerrechner in bekannter Weise verbunden ist, so bewegt wird, daß der Ursprung 19 des Koordinatensystems K sich am gewünschten Gravurpunkt 20 im Koordinatensystem K' des Reifens befindet. Durch ständigen Abgleich der Koordinatensysteme bewegt der Wagen mit Hilfe des Steuerrechners den Reifen im Brennbereich des Lasers entsprechend der gewünschten Gravur.

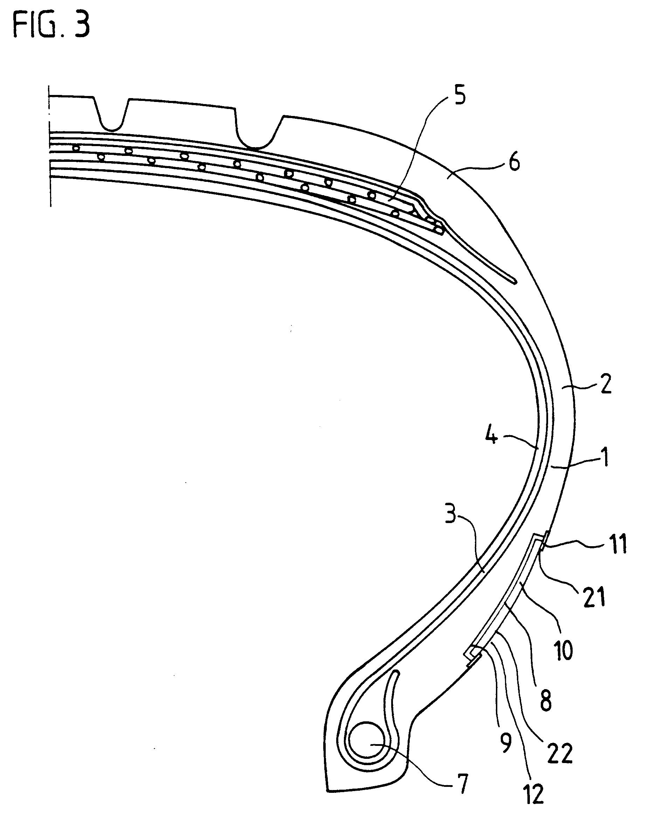

Die Brennleistung des Lasers, sowie die Fahrgeschwindigkeit des Wagens sind so aufeinander abgestimmt, daß entsprechend der Form eines gewünschten Zeichens 24, wie es in Fig. 1 dargestellt ist, der Abdeckstreifen 11 pyrotechnisch entfernt wird. Wie in Fig. 3 dargestellt ist, wird der dem Zeichen entsprechende Bereich 12 des Abdeckstreifens 11 mit verbleibender scharfer Kontur entfernt, so daß die Seitenwand 21 des so erzeugten Zeichens 24 der Farbe der Seitenwand 2 entspricht und der Zeichengrund 22 der Farbe des farbigen Gummistreifens 10.

Es ist denkbar, die Blende 23 je nach Einsatzwunsch zur Bildung eines Gravierpunkts 17 beispielsweise in Piktogrammart, in rein punktförmiger Art oder auch in Linienform auszubilden.

Ebenso ist es denkbar, einen oder mehrere Umlenkspiegel 16 beweglich gesteuert auszuführen und durch Bewegung der Umlenkspiegel 16 bei feststehendem Laser 13 und Reifen die Kontur der Gravur zu erzeugen.

Es ist auch denkbar, den Streifen 10 nur über einen Teilumfang des Reifens auszubilden. Ebenso ist es denkbar, mehrere Streifen 10 unterschiedlicher Farbe in Umfangsrichtung und/oder in radialer Richtung nebeneinander oder beabstandet voneinander anzuordnen. Hierdurch sind abschnittsweise Zeichen unterschiedlicher Farbe erzielbar. Ebenso ist es denkbar, mehrere Streifen 10 unterschiedlicher Farbe aufeinander anzuordnen, wobei auf dem äußersten Farbstreifen der Abdeckstreifen 11 in gleicher Weise, wie oben dargestellt, aufgelegt ist. Durch unterschiedlich tiefe Gravur können somit Zeichen unterschiedlicher Farbgebung beliebig abwechselnd nebeneinander erzeugt werden.

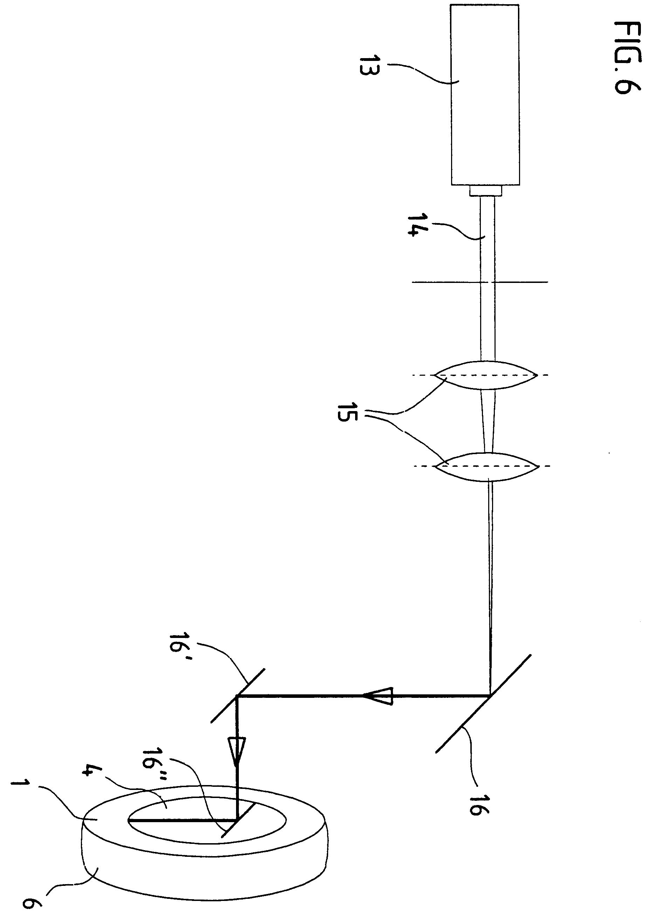

Wie in Fig. 6 dargestellt ist, ist es auch denkbar, mit Hilfe eines Lasers 13 über mehrere Spiegel 16, 16', 16'' den Laserstrahl in das Innere des Reifens umzulenken, um dort ebenso bei entsprechender Schichtgestaltung Zeichen, beispielsweise Bar-Codes, in die Inlinerschicht einzugravieren. Es ist auch denkbar, durch entsprechende Gestaltung des Inliners farbige Kennzeichen zur besseren Erkennung der Zeichen im Innern des Reifens zu erzeugen. Dabei ist es denkbar, auf den Inliner oder in eine ausnehmende Vertiefung des Inliners eine Farbschicht einzubringen und diese mit einer zusätzlichen Kautschukschicht abzudecken. Nach erfolgter Vulkanisation kann mit Hilfe des Lasers 13 ein farbiges Zeichen eingraviert werden.

Es ist auch denkbar, den Laser multifunktional auch zu anderen Bearbeitungen einzusetzen. Beispielsweise ist es denkbar, mit Hilfe des Lasers die bei der Vulkanisation entstandenen Grate von Reifenteilen mit Austrieb zu entfernen oder die in der Reifenmulde entstandenen Entlüftungsnippel abzutrennen.

Anstelle des farbigen Kautschukmaterials für den Streifen 10 ist auch der Einsatz von farbigen Materialien, die ähnliche elastische und plastische Eigenschaften wie Gummi aufweisen, beispielsweise Silikone, denkbar.

Es ist auch denkbar, zumindest den Bereich des Reifens um die gewünschten Zeichen herum mit Hilfe von Wärme entziehende Fluiden, beispielsweise flüssigen Stickstoff, zu verspröden, und dann mit Hilfe feiner mechanischer Fräser in das so verfestigte Gummimaterial die Zeichen durch dem Zeichen entsprechende Entfernung des Abdeckstreifens einzugravieren. Nach Bearbeitung wird aufgrund der höheren Außentemperatur das Gummimaterial wieder elastisch. Dabei muß jedoch beachtet werden, daß sich das Gummimaterial in seinen für den Reifen gewünschten Eigenschaften durch die vorübergehende Versprödung nicht dauerhaft verschlechtert.

### Bezugszeichenliste

- 1: Seitenwand
- 2: Seitenwandaufbaustreifen
- 3: Karkasse
- 4: Innerliner
- 5: Gürtellage
- 6: Laufstreifen
- 7: Kern
- 8: Ausnehmung
- 9: nichtverfärbender Streifen
- 10: Farbstreifen
- 11: Abdeckstreifen
- 12: Zeichenentsprechender Bereich
- 13: Laser
- 14: Strahlengang
- 15: Focusierende Optik
- 16: Spiegel
- 17: Gravierpunkt
- 18: Nullpunkt Koordinatensystem Reifen
- 19: " " Laser
- 20: Gravurpunkt
- 21: Zeichen Seitenwand
- 22: Zeichengrund
- 23: Blende
- 24: Zeichen

## Patentansprüche

1. Verfahren zum Aufbringen von Zeichen in eine sichtbare Fläche eines Reifens,
bei dem zumindest die Fläche zunächst vulkanisiert und erst nach der Vulkanisation ein Zeichen (24) in die Gummifläche eingraviert wird.

2. Verfahren zum Aufbringen eines Zeichens in eine sichtbare Fläche eines Reifens gemäß den Merkmalen von Anspruch 1,
bei der der Reifen zunächst vulkanisiert und erst nach der Vulkanisation das Zeichen (24) in die Gummifläche eingraviert wird.

3. Verfahren zum Aufbringen eines Zeichens in eine sichtbare Fäche eines Reifens gemäß den Merkmalen von Anspruch 1 oder Anspruch 2,
bei dem das Zeichen (24) in eine Fläche, die Teil der äußeren Seitenwand (1) ist, eingraviert wird.

4. Verfahren zum Aufbringen eines Zeichens in eine sichtbare Fläche eines Reifens gemäß den Merkmalen von Anspruch 3,
wobei beim Gravieren die Farbe der Oberfläche im Bereich des Zeichens (24) geändert wird.

5. Verfahren zum Aufbringen eines Zeichens in eine sichtbare Fläche eines Reifens gemäß den Merkmalen von einem oder mehreren der Ansprüche 3 oder 4,
- bei der durch Gravieren im Bereich des Zeichens (24) eine äußere Gummischicht entfernt und eine darunter liegende anders farbige Gummischicht erkennbar gemacht wird.

6. Verfahren zum Aufbringen eines Zeichens in eine sichtbare Fläche eines Reifens gemäß den Merkmalen von Anspruch 5,
- bei der beim Aufbau des Reifens im Bereich einer Vertiefung (8) des Seitenwandgummistreifens (2) die Vertiefung (8) mit einem die äußere Kautschukschicht bildenden Abdeckstreifen (11) überbrückt wird, der mit der umgebenden Seitenwandoberfläche eine durchgehende vertiefungsfreie Fläche bildet,
- bei der nach Aufbau des Reifens der Reifen vulkanisiert und bei der nach der Vulkanisation durch Gravieren im Bereich des Zeichens (24) eine äußere Gummischicht entfernt und eine darunter liegende anders farbige Gummischicht erkennbar gemacht wird.

7. Verfahren zum Aufbringen von Zeichen in eine sichtbare Fäche eines Reifens gemäß den Merkmalen von einem oder mehreren der Ansprüche 5 oder 6,
- bei dem mehrere unterschiedlich farbige Farbstreifen übereinander oder nebeneinander angeordnet sind,
- bei dem durch Gravieren Zeichen mit unterschiedlichen Farben erzeugt werden.

8. Verfahren zum Aufbringen von Zeichen in eine sichtbare Fäche eines Reifens gemäß den Merkmalen der Ansprüche 1 oder 2,
- bei dem das Zeichen (24) in eine Fläche, die Teil der Innenschicht (4) des Reifens ist, eingraviert wird.

9. Verfahren zum Aufbringen von Zeichen in eine sichtbare Fäche eines Reifens gemäß den Merkmalen von einem oder mehreren der Ansprüche 8,
- bei dem das Zeichen (24) auf pyrotechnischem Wege mit Hilfe eines Lasers (13) eingraviert wird.

10. Verfahren zum Aufbringen von Zeichen in eine sichtbare Fäche eines Reifens gemäß den Merkmalen von einem oder mehreren der Ansprüche 1 bis 8,
- bei der die Fläche zunächst durch Aufbringen von der Oberfläche Wärme entziehenden flüssigen Gasen versprödet wird und im Anschluß daran die Gravur mit Hilfe mechanischer Graviermittel erfolgt.

11. Vorrichtung zur Durchführung des Verfahrens gemäß den Merkmalen von Anspruch 1,
- mit zumindest einer Gravureinrichtung und mit Mitteln zur Aufnahme des Reifens, wobei die Gravureinrichtung und die Mittel zur Aufnahme des Reifens relativ zueinander dreidimensional beweglich und mit Antriebsmitteln zur Erzielung der Relativbewegung verbunden sind, mit Mitteln zur Steuerung der Antriebsmittel zur Erzielung einer Relativbewegung entsprechend der Kontur der Gravur.

12. Reifen
- mit in einen gleichförmigen Bereich der Gummireifenoberfläche eingravierte, Vertiefungen bildenden Konturen zur Informationsvermittlung.

13. Reifen gemäß den Merkmalen von Anspruch 12,
- wobei der Konturgrund (22) andersfarbig als die umgebende Oberfläche und als die Konturseitenwände (21) ausgebildet ist.

14. Reifen mit gleichförmiger Gummireifenoberfläche gemäß den Merkmalen von Anspruch 13,
- mit einer zwischen Festigkeitsträger beinhaltenden Schicht (3) und einer die Oberfläche bildenden Gummischicht (11) angeordneten andersfarbigen Gummischicht (10), die den Konturgrund (22) bildet.

15. Verfahren zur Herstellung eines Reifens gemäß den Merkmalen von einem oder mehreren der Ansprüche 12 bis 14,
- bei dem auf eine festigkeitstragende Schicht, insbesondere auf die Seitenwand (1), zunächst zumindest eine von der sonstigen Oberfläche des Reifens abweichende farbige Schicht (10) Kautschuk aufgelegt und darüber eine oberflächenbildende Kautschukschicht (11) aufgelegt wird,
- bei dem der Reifen danach vulkanisiert wird,
- bei dem nach Vulkanisation zumindest ein Zeichen (24) in die obere Schicht (11) eingraviert wird, so daß die andersfarbige Schicht (10) im Bereich der Zeichenkontur erkennbar ist.
